# EUROPEAN PATENT APPLICATION

(11) **EP 0 970 653 A1**
(43) Date of publication of application: **12.01.2000**
(21) Application number: 98305799.3
(22) Date of filing: 21.07.1998
(51) Int. Cl.: A47L 9/24, A47L 9/02, F16L 19/065, F16L 19/02

(54) **Hose connector**

(30) Priority: 26.06.1998 US 105318
(71) Applicant: Techtronic Industries Co., Ltd., Tsuen Wan, New Territories (HK)
(72) Inventor: Breit, Oliver Rudolf, 6th Floor, Flat 2,, Estate, Hung Hom, Kowloon, Hong Kong (HK)
(74) Representative: Luckhurst, Anthony Henry William

(57) **Abstract**

A connector 20 for connecting a vacuum cleaner 22 to an end of a hose 24 comprises a threaded body that receives a threaded shell 14. When the shell 14 is fully tightened to the outside of the body, the shell distorts a specially preformed seal 16. The seal 16 grips the outside of the hose 24 to form an airtight seal. The same connector can be used for somewhat different dimensioned hoses by using different seals 16.

## Description

The invention relates to hose connectors.

The invention relates more particularly to a hose connector for a vacuum cleaner. The hose may be a solid tube or a tube formed with a solid end tubular member fixed to a flexible plastics hose. The hose is required to fit to the vacuum cleaner in a generally air-tight manner so that vacuum normally developed by the vacuum cleaner is transferred into the hose as required. The hose is normally releasably connected between a vacuum cleaner body and the hose.

It is an object of the invention to provide a connector for connecting such a hose that is capable of being readily connected in air-tight manner between a hose and a vacuum cleaner and which preferably accommodates more than one size of hose.

According to the invention there is provided a hose connector for a vacuum cleaner having a body with flexible walls integrally formed at one end by a castellated peripheral ring arranged to spring fit to an aperture in the vacuum cleaner, in which the body is formed with an external thread at its other end, including a threaded shell screwed over the external threads, a spacer ring that bears against an end surface of the other end of the body, and a sealing ring between the ring that is preformed with a peripheral outer groove that is squeezed between the spacer ring and an internal end face of the shell to deform so that the sealing ring bears against an outer surface of a hose when the shell is screwed up onto the threaded end of the body to form an air-tight gripping connection to the hose.

A longitudinal axis of the one end of the body is preferably at approximately 40° to a longitudinal axis of other end.

A hose connector according to the invention will now be described by way of example with reference to the accompanying drawings in which:-
Figure 1 is a part-sectional side view of the connector;
Figure 2 is an exploded isometric view of the connector;
Figure 3 is a side view of one seal for the connector showing typical dimensions in millimetres;
Figure 4 is a side view of another seal for the connector;
Figure 5 is a sectional side view of another connector; and
Figure 6 is a sectional side view of the other connector and a vacuum cleaner.

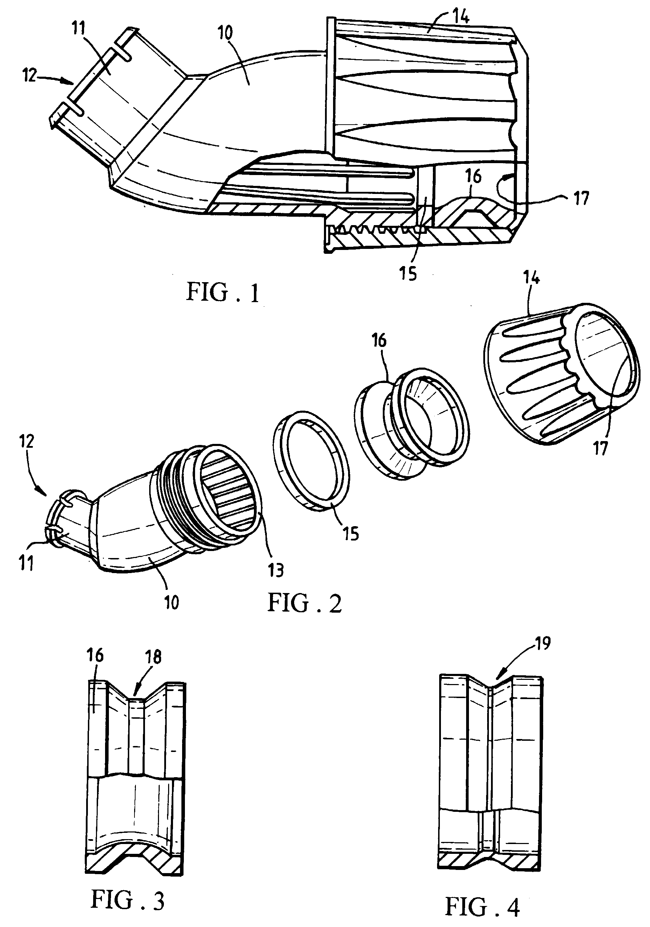

Referring to Figures 1 and 2, the connector comprises a body 10 with flexible walls 11 formed by a castellated end 12 that forms a connection to an aperture (not shown) in a vacuum cleaner. The aperture is conventionally provided with a rubber sealing ring (not shown). End 13 of the body 10 is externally threaded to receive a threaded shell 14. A spacer 15 comprising a rigid ring abuts against the end 13 and a seal 16 fits between the spacer 15 and an inside surface 17 of the shell 14. In Figure 1, the shell 14 is screwed fully onto the end 13 so that the seal is somewhat distorted inwards to seal against an outside surface (shown dotted in Figure 1) of a hose.

Figures 3 and 4 show two seals 16 that can fit into the connector so as to hold and seal two somewhat different sized hoses. Both of the seals are preformed with respective grooves 18 and 19 and the seal is laterally compressed in use between the spacer 15 and the surface 17. The seals are dimensioned so that when the shell 14 is screwed fully on to the body 10, they grip the outside of the hose to form an air-tight seal.

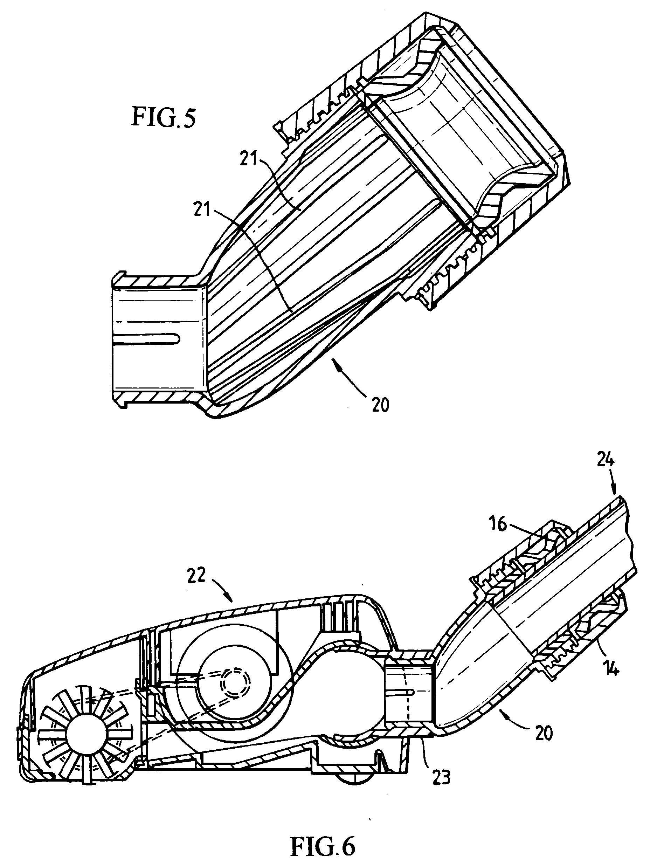

Figure 5 shows a similar connector 20 that is formed with external strengthening ribs 21, and in Figure 6 the connector 20 is shown fitted to a vacuum cleaner body 22 by an adapter 23. An end of a hose 24 is retained and sealed by the seal 16 (see Figure 1) to the connector 20 as required.

The hose connector is suitable for a mains supplied and battery operated vacuum cleaner.

## Claims

1. A hose connector for a vacuum cleaner having a body with flexible walls integrally formed at one end by a castellated peripheral ring arranged to spring fit to an aperture in the vacuum cleaner, in which the body is formed with an external thread at its other end, including a threaded shell screwed over the external threads, a spacer ring that bears against an end surface of the other end of the body, and a sealing ring between the ring that is preformed with a peripheral outer groove that is squeezed between the spacer ring and an internal end face of the shell to deform so that the sealing ring bears against an outer surface of a hose when the shell is screwed up onto the threaded end of the body to form an air-tight gripping connection to the hose.

2. A hose connector according to claim 1, in which a longitudinal axis of the one end of the body is at approximately 40° to a longitudinal axis of other end.
